# EUROPÄISCHE PATENTSCHRIFT

(11) **EP 1 326 811 B1**
(45) Veröffentlichungstag und Bekanntmachung des Hinweises auf die Patenterteilung: **04.08.2004**
(21) Anmeldenummer: 01986295.2
(22) Anmeldetag: 04.10.2001
(51) Int. Cl.: C04B 28/06, E04B 1/94

(54) **BRANDSCHUTZMATERIAL**
FIRE-PROOF MATERIAL
MATERIAU IGNIFUGE

(30) Priorität: 05.10.2000 DE 10049391
(43) Veröffentlichungstag der Anmeldung: 16.07.2003
(73) Patentinhaber: PROMAT INTERNATIONAL N.V., 2830 Tisselt (BE)
(72) Erfinder: ANTON, Octavian, B-1020 Brüssel (BE); WU, Xiao, B-1932 Zaventem (BE)
(74) Vertreter: Schreiber, Christoph, Dr.
(86) Internationale Anmeldenummer: PCT/EP2001/011456
(87) Internationale Veröffentlichungsnummer: WO 2002/028799

(56) Entgegenhaltungen:
- EP-A- 0 943 590
- DE-C- 19 517 267
- FR-A- 2 091 067
- US-A- 3 042 536
- DATABASE WPI Section Ch, Week 199906 Derwent Publications Ltd., London, GB; Class L02, AN 1999-064762 XP002191515 & JP 10 310477 A (KUROSAKI REFRACTORIES CO), 24. November 1998 (1998-11-24)

## Beschreibung

Gegenstand der vorliegenden Erfindung ist ein Brandschutzmaterial, das heißt ein Material mit hohen Brandschutzeigenschaften für Konstruktionen aus Beton und Spannbeton, insbesondere für Tunnel in Form von vorgefertigten Platten oder aufgespritzten, abgebundenen Beschichtungen, hergestellt aus hydraulisch abbindenden Gemischen enthaltend Tonerdeschmelzzement, gegebenenfalls im Gemisch mit Portlandzement, Füllstoffen sowie gewünschtenfalls Fasern, Abbindebeschleunigern, Abbindeverzögerern, Plastifizierungsmitteln und Schaumbildnem.

Ein Material mit guten Brandschutzeigenschaften ist Gegenstand der DE C 195 17 267, wobei dieses Material in Form von vorgefertigten Platten oder als nachträglich auf zu schützende Bauteile aufgetragene Beschichtung besteht aus einem Bindemittel, synthetischem Xonotlit und mindestens 5 Gew.% Ettringit und/oder Metavariscit. Dieses Material hat sich sehr gut bewährt, ist aber nicht in der Lage, die höheren Anforderungen zu erfüllen, die inzwischen gewünscht und teilweise schon gefordert werden, insbesondere für Tunnel. So wird verlangt, dass im Brandfall keine irreparablen Schäden entstehen durch Verlust von mehr als 50% der ursprünglichen Festigkeit. Die Niederlande verlangen bei getauchten Tunneln, dass die Oberfläche des Betonkerns maximal 380°C erreicht und 25 mm von der Oberfläche des Betonkerns entfernt die maximale Temperatur nur 250°C erreicht. Bei gebohrten Tunneln darf diese maximale Oberflächentemperatur 200 bis 250°C nicht überschreiten; vgl. Both et al. TNO Centre for Fire Research und Tan et al. Minestry of Public Works, The Netherlands. Nach dem Brandunfall im Mont Blanc-Tunnel wurden die Wünsche an die Brandschutzeigenschaften für Tunnel weiter erhöht.

Die Anforderungen der Niederlande an Tunnel gehen von der Annahme aus, dass die Verbrennungsenergie eines verunglückten Tanklastwagens zu einer lokalen Erhitzung führt, die von dem Betonkem der Tunnelwand weitgehend unbeschadet überstanden werden kann. Der Test dieser Anforderung geht somit dahin, dass eine flache oder gebogene Platte, die mechanisch auf der Oberfläche vom Beton befestigt ist, nicht herunterfällt, wobei insbesondere aufgespritzte Beschichtungen dazu neigen, die Adhäsion zu verlieren und sich zu lösen. Die Testbedingungen gehen aus von zwei Stunden, wobei die Oberflächentemperatur des Betonkerns bei gebohrten Tunneln 200°C und bei getauchten Tunneln 380°C nicht überschreiten darf, wobei die Betondicke = oder > 150 mm beträgt. Das Material für den Brandschutz muss den Wärmeschock überstehen, widerstandsfähig gegen Abrasion sein und unempfindlich gegen Frost/Auftauzyklen. Die mechanische Festigkeit dieses Materials beim Dreipunktbiegeversuch sollte bei 20°C möglichst hoch sein. Vorzugsweise sollte sie mindestens 7 MPa betragen. Das Material sollte widerstandsfähig sein gegen chemische Salze. Schließlich sollte es quarzfrei sein aus Gründen des Umweltschutzes und der öffentlichen Gesundheit. Die Dichte des Materials sollte etwa 900 kg/m³ betragen.

Bisher bekannte ursprünglich nur für Gebäude entwickelte Materialien mit hohen Brandschutzeigenschaften sind die gemäß DE C 195 17 267 oder die seit Jahren mit Erfolg auch im Tunnelbau eingesetzten Platten Promatect H der Firma Promat. Es handelt sich um autoklavierte, faserverstärkte Leichtbauplatten auf Basis von Calciumsilikaten. Sie werden hergestellt aus Portlandzement, Kieselsäure, expandierten Perliten, Calciumhydroxid, Fasern und weiteren Zusätzen. Sie werden zwar für den Tunnelbau eingesetzt, aber erfüllen noch nicht alle Wünsche und Anforderungen an den Brandschutz für Tunnel. Insbesondere handelt es sich um die Probleme der Delamination, der beschränkten Dicke und die Möglichkeiten der Reparatur.

Auch andere Produkte nach dem Stand der Technik, die sich teilweise ebenfalls bewährt haben, erfüllen nicht die Anforderungen an den Tunnelbau. Die US 4,544,409 beschreibt ein Material aus Zementen und Trinatriumphosphathydrat. Diese Produkte schmelzen bei relativ niedrigen Temperaturen und sind deshalb für Tunnel ungeeignet.

Die EP 0 769 482 beschreibt einen aufspritzbaren Zementmörtel mit Gips und Calciumaluminat. Auch dieses Material ist nicht in der Lage, die Anforderungen an den Tunnelbau zu erfüllen. Das gleiche gilt für die im Handel befindlichen Platten der Firma Kurosaki, welche gemäß Analysen bestehen aus Wollastonit, Mullit, Perlite, Glasfasern und Synthesefasern und mit Tonerdeschmelzzement gebunden sind. Sie besitzen eine Dichte von 1050 kg/m³, aber nur eine Biegefestigkeit von 4 MPa.

US 3,042,536 betrifft ein Füllmaterial zum Füllen und Isolieren von Spalten zwischen porösen Baumaterialien, die zur Wärmedämmung verwendet werden. Offenbart werden Zusammensetzungen, die als Calciumsilikat Xonotlit enthalten, das in Form von langen, dünnen, stäbchenförmigen Kristallen vorlieg.

Die EP 1 001 000 entsprechend der WO 00/27948 beschreibt ein Material, welches auch für Tunnel geeignet sein soll, bei welchem durch Zumischung von Sägemehl eine bei hohen Temperaturen flüchtige Komponente enthalten ist. Dieses Material ist inzwischen von der Firma Thermal Ceramics unter der Bezeichnung Fire Barrier 135 auf den Markt gebracht worden. Dieses Material enthält Kaolin, weiches nicht nur teuer ist, sondern beim starken Erhitzen so stark schrumpft, dass das Produkt rissig wird. Weiterhin sind die Auftragungsdicke und die Haftfestigkeit problematisch.

Die Erfindung hat sich somit die Aufgabe gestellt, ein Brandschutzmaterial für Konstruktionen aus Beton und Spannbeton zur Verfügung zu stellen, welches den oben genannten erhöhten Wünschen und Anforderungen an den Brandschutz von Tunnelbauten erfüllt und im Brandfall zu keinen gesundheitlichen Risiken führt.

Diese Aufgabe wird gelöst durch ein Material, welches hergestellt ist aus einem hydraulisch abbindenden Gemisch enthaltend Tonerdeschmelzzement, gegebenenfalls im Gemisch mit Portlandzement, Füllstoffen sowie gewünschtenfalls Fasern, Abbindebeschleunigern, Abbindeverzögerern, Plastifiziermitteln und Schaumbildnern, wobei das abgebundene Material weniger als 5 Gew.% Ettringit enthält und welches dadurch gekennzeichnet ist, dass das Gemisch im noch nicht abgebundenen Zustand 50 bis 200 Gew.-Teile Tonerdeschmelzzement und 10 bis 250 Gew.-Teile Xonotlit enthält, wobei das Xonotlit in Form von verfilzten Kügelchen vorliegt. Vorzugsweise wird das Gemisch hergestellt aus gleich viel oder doppelt so viele Gew.-Teilen hydraulischem Binder wie Gew.-Teile Xonotlit.

Das Gemisch kann im nicht abgebundenem Zustand als zusätzlichen hydraulischen Binder Portlandzement enthalten sowie bis zu 50 Gew.-% Füllstoffe, gewünschtenfalls Fasern, Abbindebeschleuniger, Abbindeverzögerer, Plastifizier- mittel und Schaumbildner. Im abgebundenen Zustand enthält es stets weniger als 5 Gew.% Ettringit.

Als Füllstoffe werden vorzugsweise verwendet Wollastonit und/oder Aluminiumhydroxid, gegebenenfalls aber auch Tobermorit, welcher in Form von Nadeln oder annähernd kugelförmigen Teilen zugegeben werden kann. Als Füllstoffe können weiterhin zugesetzt werden Perlite und/oder Vermiculite, vorzugsweise in bereits geblähter Form. Es ist aber durchaus möglich, diese Füllstoffe auch ganz oder teilweise in ungeblähter Form zuzusetzen. Weitere Füllstoffe können sein expandierte Tone, expandierte Glaskugel oder Schamotte-Mehl.

Weiterhin können Fasern zugesetzt werden, um das Herstellungsverfahren zu erleichtern und das fertige Material zu verstärken. Geeignete Fasern sind beispielsweise Glasfasern, MMMF (Man Made Mineral Fibers), Cellulosefasern, organische Fasern wie PVA oder PP.

Übliche Abbindebeschleuniger, Abbindeverzögerer, Plastifiziermittel und Schaumbildner können zugesetzt werden, insbesondere um das Herstellungsverfahren zu erleichtern. Zu diesen Zusätzen zählen Calciumhydroxid, Natronlauge, Natriumcarbonat, Calciumcarbonat, Lithiumcarbonat, Borax, Zitronensäure, Aluminiumhydroxid. Bevorzugt wird Calciumcarbonat, welches sowohl als Abbindebeschleuniger wirkt als auch als geeigneter Füllstoff.

Das Material sollte im abgebundenem Zustand praktisch keinen oder nur wenig Ettringit enthalten. Der Ettringitgehalt sollte jedenfalls stets weniger als 5 Gew.% betragen. Während Ettringit bei dem Material gemäß DE C 195 17 267 eine sehr wichtige und erfindungswesentliche Komponente ist, führen gerade die größeren Mengen an Ettringit zu deutlich verschlechterten Eigenschaften bei den hohen Temperaturen, wie sie bei einem Tunnelbrand auftreten können.

Die Herstellung des Materials in Form von vorgefertigten Platten erfolgt vorzugsweise durch Gießen oder Filterpressen, wobei aber auch das Hatschek-Verfahren oder das Flow-on-Verfahren zur Anwendung kommen kann. Ein gebräuchliches Verfahren zur Herstellung von Bauteilen aus Faserzement ist das Hatschek-Verfahren. Bei diesem Verfahren wird eine Mischung bestehend aus einer zementgebundenen Matrix mit inerten und reaktiven Füllstoffen sowie aus Fasern mit erheblichem Wasserüberschuss angesetzt und über einen oder mehrere Rundsiebzylinder entwässert. Das dabei entstehende Stoffvlies wird auf eine Transportvorrichtung aufgebracht, mittels Vakuum weiter entwässert und auf einen rotierenden Zylinder, die sogenannte Formatwalze, aufgewickelt, bis die gewünschte Bauteildicke erreicht ist. Die maximale Dicke beträgt dann 25 bis 27 mm. Nach dem Hatschek-Verfahren hergestellt ist beispielsweise das oben genannte Handelsprodukt Promatect H.

Die erfindungsgemäß verwendeten Mengen an Tonerdeschmelzzement und Xonotlit können in den angegebenen Grenzen variiert werden, wobei jedoch bevorzugt ist, dass das Gemisch gleich viel oder doppelt so viele Gew.-Teile hydraulische Binder wie Gew.-Teile Xonotlit enthält.

Die Dichte des Material im abgebundenen Zustand kann durch die Art der Füllstoffe variiert werden im Bereich zwischen 0,7 und 1,3 g/cm³, bevorzugt wird eine Dichte von etwa 0,9 g/cm³.

Das abgebundene erfindungsgemäße Material besitzt die Eigenschaft, dass es überwiegend im Temperaturbereich zwischen 70 und 450°C schrittweise dehydratisiert wird und somit in der Lage ist, Schritt für Schritt Hitze zu absorbieren und den Anstieg der Temperatur im Bereich zwischen Oberfläche und zu schützender Unterlage zu vermindern. Diese Eigenschaften können durch endotherme Füllstoffe verstärkt werden. Wichtigster Bestandteil des Materials ist der Xonotlit, der für sich ein sehr gutes Isoliermaterial darstellt. Als Xonotlit wird der synthetische Xonotlit verwendet, der bei dem angewendeten Verfahren in Form von verfilzten Kügelchen anfällt.

Durch die erfindungsgemäße Kombination des Xonotlits mit dem Tonerdeschmelzzement entstehen die geforderten optimalen endothermischen und isolierenden Eigenschaften. So dehydratisiert der Xonotlit erst bei ca. 800°C und geht dabei in Wollastonit über. Diese Dehydratisierung ist eine stark endotherme Reaktion und verbraucht viel Energie. Der dabei entstehende Wollastonit besitzt einen theoretischen Schmelzpunkt bei 1530°C. Die Kombination aus Wollastonit und abgebundenem Tonerdezement führt zu einer Minimierung der Schrumpfung und verhindert so die Risiken durch Risse beim Schrumpfen. Der Brandschutz und die Isolierung machen somit Gebrauch von verschiedenen Phasenübergängen und der Dehydratisierung des abgebundenen Tonerdezements und des Xonotlits unter Beibehaltung der räumlichen Struktur und der mechanischen Stabilität.

Vorzugsweise wird das Material eingesetzt in Form von vorgefertigten glatten oder gebogenen Platten. Es kann aber auch in an sich bekannter Weise aufgespritzt werden, wobei dann darauf zu achten ist, dass die geforderte Mindestdicke der Beschichtung garantiert wird und das Material am Untergrund gut haftet. Das erfindungsgemäße Material kann auch als Reparatur- und Fugenmörtel verwendet werden, um ausgebrochene oder ausgeglühte Teile des Materials zu reparieren und dabei die gleichen oder vergleichbare Eigenschaften der reparierten Stellen zu gewährleisten.

In den nachfolgenden Beispielen ist das erfindungsgemäße Produkt näher erläutert. Aus den Vergleichsversuchen mit Produkten des Standes der Technik geht hervor, dass das erfindungsgemäße Material deutlich überlegene Eigenschaften hat, die aufgrund des Standes der Technik nicht vorhersehbar waren.

### Beispiel 1

Die Zusammensetzung von Mischungen zur Herstellung des erfindungsgemäßen Produktes sind in der nachfolgenden Tabelle I zusammengestellt.

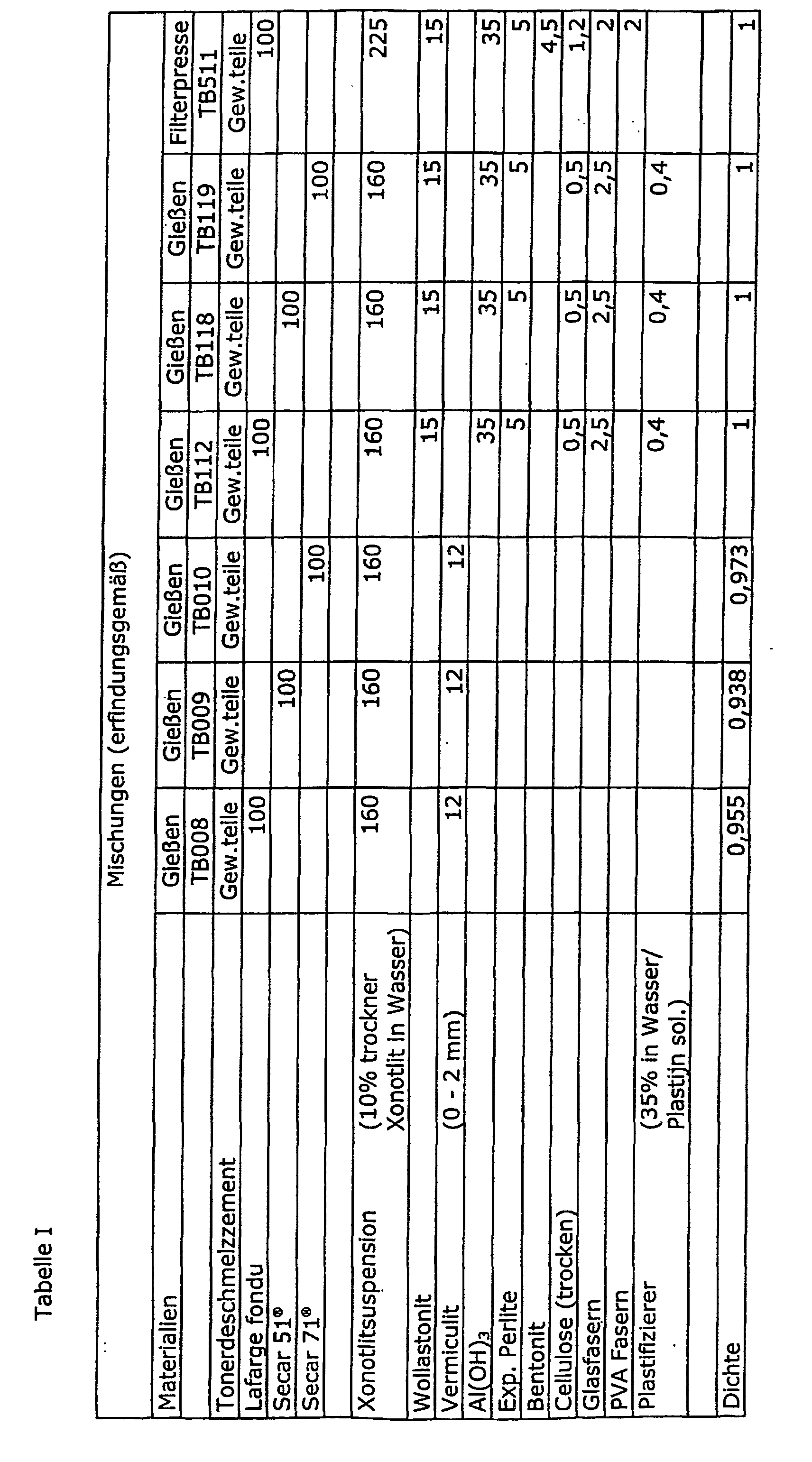

Die Zusammensetzung der Vergleichsmischungen sind in der Tabelle II zusammengestellt.

**Tabelle II**

| Vergleichsmischung (Gewichtsteile) | | | |
|---|---|---|---|
| | Gießen | Gießen | Gießen |
| | TB011 | TB042 | TB043 |
| Tonerdeschmelzzement | | | |
| Lafarge fondu (CFL) | 100 | 100 | 100 |
| | | | |
| Wollastonit | 60 | | |
| | | | |
| Exp. Ton 0 - 2 mm | | 40 | |
| Exp. Ton 2 - 4 mm | | 80 | |
| | | | |
| Glaskugeln (Poraver®) 0,25 - 0,5 mm | | | 40 |
| Glaskugeln (Poraver®) 1 - 2 mm | | | 60 |
| Wasser | 200 | 100 | 100 |
| Kaolin | 140 | | 5 |
| Gips | | 50 | 50 |
| Dichte | 1,22 | 1,2 | 0,85 |

Das Produkt TB011 entspricht in etwa dem Handelsprodukt Firebarrier 135.

Das Produkt Promatect H (kurz PtH) ist hergestellt nach Hatschek-Verfahren und im Autoklaven gehärtet (Dicke der Platten 25 bis 27 mm, Dichte 0,9 bis 1,0). Die Untersuchung dieser Materialien nach der niederländischen Testmethode ergab die Werte gemäß Figuren I bis V. Hieraus ergibt sich, dass die erfindungsgemäßen Produkte TB008, TB112, TB118, TB119 und TB511 deutlich bessere Eigenschaften aufweisen als die Vergleichsprodukte TB042, TB043 und PtH. Die Testergebnisse des Vergleichproduktes TB011 waren noch schlechter als die Produkte TB008 und PtH.

### Beispiel 2

Material von TB511 gemäß Beispiel 1 wurde im Technikum zu Platten verarbeitet und in verschiedenen Schichtdicken von 15, 25 und 30 mm Stärke mit flachen Zementplatten verbunden. Die Platten besaßen eine Dichte von 0,900 kg/m³ und eine Restfeuchte von 2,5%. Sie wurden von der Firma TNO, einem international bekannten, unabhängigen Testlabor in Holland auf ihre Brandschutzeigenschaften untersucht nach den Vorschriften RWS (Rijkswaterstaat), bei denen ein Kohlenwasserstofffeuer simuliert wird.

Zum Vergleich wurde eine Schicht von 38,5 mm Stärke des Handelsproduktes FireBarrier 135® (annähernd entsprechend der Zusammensetzung TB011) untersucht. Die Schicht besaß eine Dichte von 1,257 kg/m³ und eine Restfeuchte von 7,5%. Dieses Wasser führt zu einem etwas längeren Brandschutz. Die Testergebnisse sind in Figur V zusammengestellt. Sie zeigen, dass das erfindungsgemäße Material bereits bei einer Schichtdicke von nur 15 mm die Mindestbedingung erfüllt, an der Rückseite, also der Berührungsfläche mit dem Zement, nach 120 min unter 380°C zu bleiben. Das Vergleichsprodukt FireBarrier 135® erreicht dieses Ziel nur bei der Schichtdicke von 38,5 mm und einem dreifach höheren Feuchtigkeitsgehalt.

Das erfindungsgemäß Material bei Schichtdicken von 25 und 30mm gewährt einen wesentlich besseren Brandschutz. TNO hat bereits einen Brandschutz von mindestens drei Stunden ermittelt.

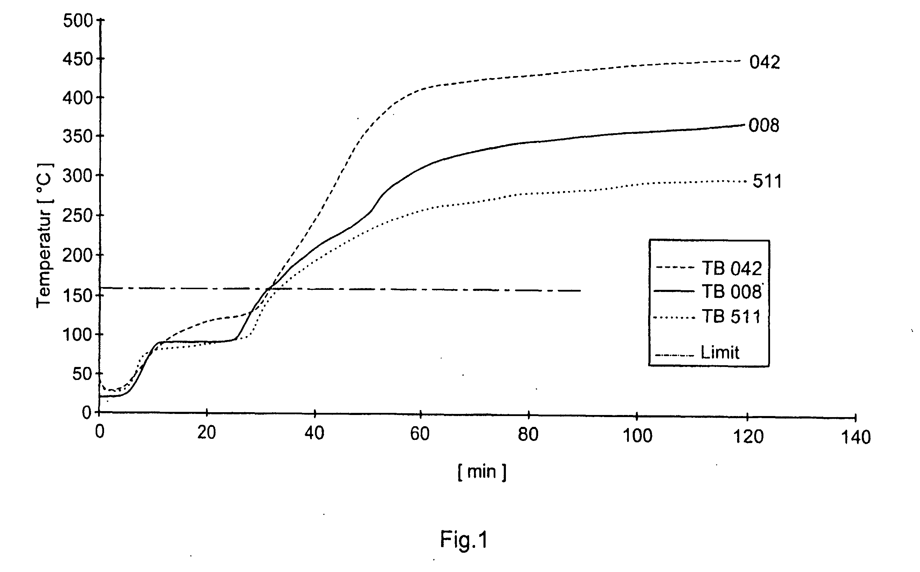

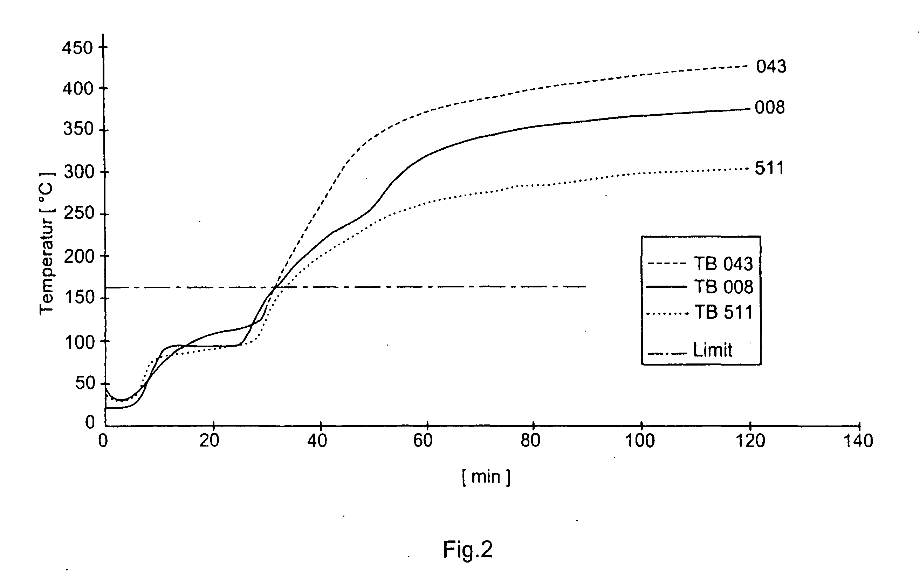

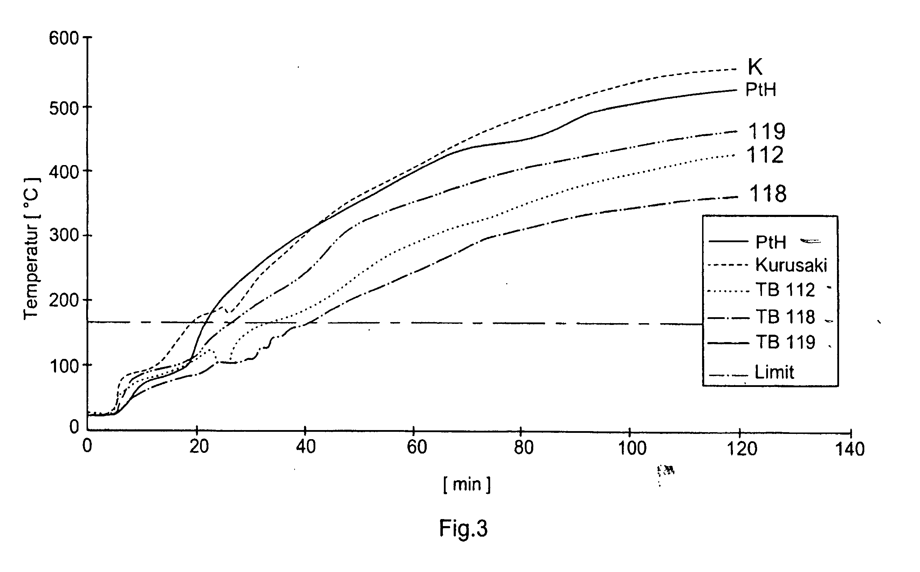

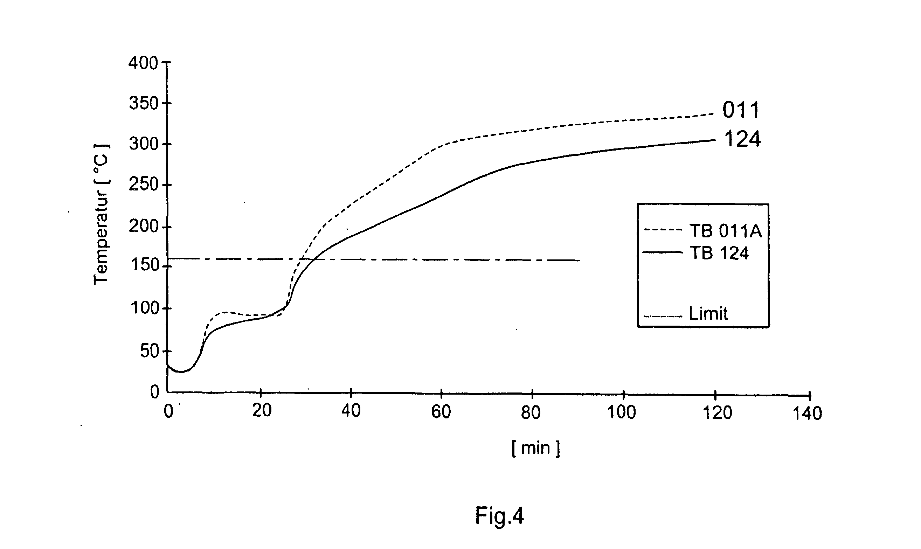

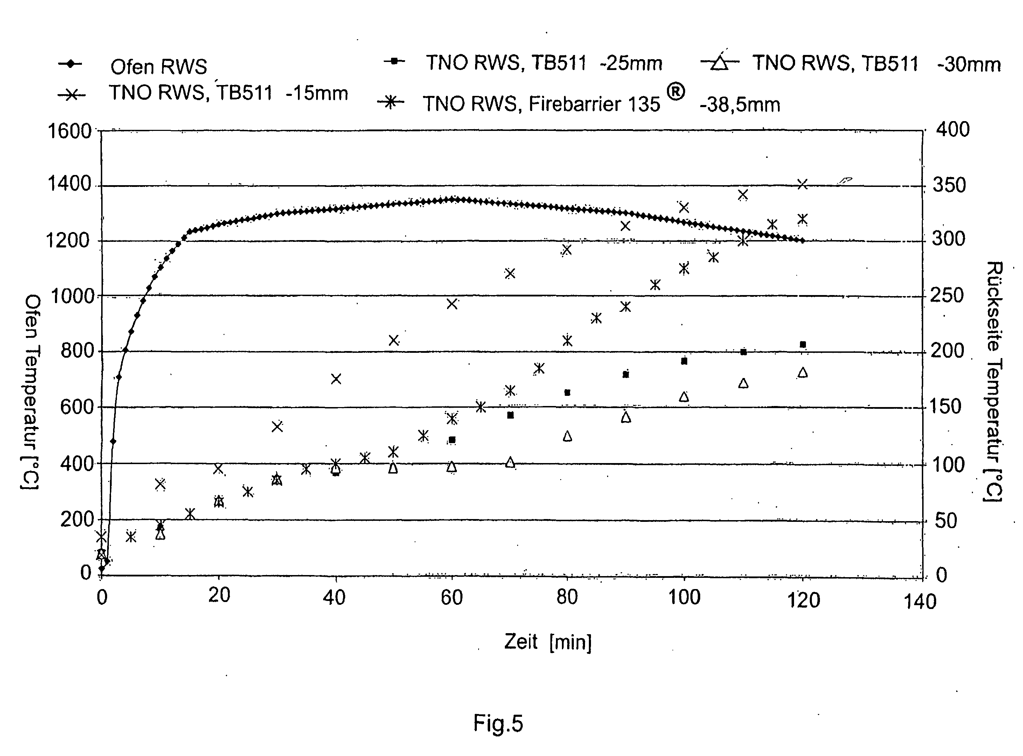

## Patentansprüche

1. Brandschutzmaterial für Konstruktionen aus Beton und Spannbeton, insbesondere für Tunnel in Form von vorgefertigten Platten oder aufgespritzten, abgebundenen Beschichtungen, welches hergestellt ist aus einem hydraulisch abbindenden Gemisch enthaltend Tonerdeschmelzzement, wobei das abgebundene Material weniger als 5 Gew.% Ettringit enthält, **dadurch gekennzeichnet, dass** das Gemisch im noch nicht abgebundenen Zustand 50 bis 200 Gew.-Teile Tonerdeschmelzzement und 10 bis 250 Gew.-Teile Xonotlit enthält, wobei das Xonotlit in Form von verfilzten Kügelchen vorliegt.

2. Material gemäß Anspruch 1, **dadurch gekennzeichnet, dass** es aus gleich viel oder doppelt so viele Gew.-Teile hydraulische Binder wie Gew.-Teile Xonotlit hergestellt ist.

3. Material gemäß Anspruch 1 oder 2 **dadurch gekennzeichnet, dass** es im noch nicht abgebundenem Zustand zusätzliches Portlandzement, Füllstoffe, Fasern, Abbindebeschleuniger, Abbindeverzögerer, Plastifiziermittel und/oder Schaumbildner enthält.

4. Material gemäß Anspruch 3, **dadurch gekennzeichnet, dass** das abbindende als Füllstoffe Wollastonit, Tobermorit und/oder Aluminiumhydroxid enthält.

5. Material gemäß einem der Ansprüche 1 bis 4! **dadurch gekennzeichnet, dass** das abbindende Gemisch Leichtfüllstoffe aus der Gruppe Perlite und/oder Vermiculite enthält.

6. Material gemäß einem der Ansprüche 1 bis 5, **dadurch gekennzeichnet, dass** es Fasern enthält.

7. Material gemäß einem der Ansprüche 1 bis 6, **dadurch gekennzeichnet, dass** es im abgebundenem Zustand eine Dichte von 0,7 bis 1,3 g/cm³ aufweist.

8. Material gemäß einem der Ansprüche 1 bis 7, **dadurch gekennzeichnet, dass** es in Form von vorgefertigten Platten vorliegt, die durch Gießen oder Filterpressen hergestellt sind.

9. Material gemäß Anspruch 8, **dadurch gekennzeichnet, dass** die Platten in gebogener Form vorliegen.

10. Vorgefertigte Platte bestehend aus einem Brandschutzmaterial gemäß mindestens einem der Ansprüche 1 bis 9.

## Claims

1. A fire protection material for constructions of concrete and prestressed concrete, especially for tunnels, in the form of prefabricated plates or sprayed-on and cured coatings prepared from a hydraulically curing composition containing aluminous cement, wherein the cured material contains less than 5% by weight of ettringite, **characterized in that** the composition contains from 50 to 200 weight parts of aluminous cement and from 10 to 250 weight parts of xonotlite in the uncured state, the xonotlite being in the form of felted globules.

2. The material according to claim 1, **characterized by** being prepared from as many or twice as many weight parts of hydraulic binder as there are weight parts of xonotlite.

3. The material according to claim 1 or 2, **characterized by** containing additional Portland cement, fillers, fibers, curing accelerators, curing delayers, plasticizing agents and/or foaming agents in the uncured state.

4. The material according to claim 3, **characterized in that** the curing composition contains wollastonite, tobermorite and/or aluminum hydroxide as fillers.

5. The material according to any of claims 1 to 4, **characterized in that** the curing composition contains light-weight fillers selected from the group consisting of pearlites and/or vermiculites.

6. The material according to any of claims 1 to 5, **characterized by** containing fibers.

7. The material according to any of claims 1 to 6, **characterized by** having a density of from 0.7 to 1.3 g/cm³ in the cured state.

8. The material according to any of claims 1 to 7, **characterized by** being in the form of prefabricated plates prepared by casting or filter pressing.

9. The material according to claim 8, **characterized in that** said plates are in a bent form.

10. A prefabricated plate consisting of a fire-protection material according to at least one of claims 1 to 9.

## Revendications

1. Matériel de protection contre l'incendie pour des constructions en béton et en béton précontraint, en particulier pour tunnel, sous la forme de plaques préfabriquées ou de revêtements projetés et faisant prise, ce matériel étant fabriqué à partir d'un ciment fondu alumineux contenant un mélange faisant prise hydrauliquement, le matériel faisant prise contenant moins de 5% en poids d'ettringite,
**caractérisé en ce que** le mélange, dans l'état n'ayant pas encore fait prise, contient 50 à 200 parties en poids de ciment fondu alumineux et 10 à 250 parties en poids de xonotlite, la xonotlite se présentant sous la forme de petites billes feutrées.

2. Matériel suivant la revendication 1, **caractérisé en ce qu'**il est fabriqué à partir de la même quantité ou à partir d'une quantité double de parties en poids de liant hydraulique que de parties en poids de xonotlite.

3. Matériel suivant la revendication 1 ou 2, **caractérisé en ce qu'**en l'état n'ayant pas encore fait prise, ce matériel contient en addition du ciment Portland, des matières de remplissage, des fibres, des accélérateurs de prise, des retardateurs de prise, des plastifiants et/ou des agents moussants.

4. Matériel suivant la revendication 3, **caractérisé en ce que** le mélange de prise contient, comme produit de remplissage, de la wollastonite, de la tobermorite et/ou de l'hydroxyde d'aluminium.

5. Matériel suivant l'une des revendications 1 à 4, **caractérisé en ce que** le mélange faisant prise contient des produits de remplissage légers du groupe perlite et/ou vermiculite.

6. Matériel suivant l'une des revendications 1 à 5, **caractérisé en ce qu'**il contient des fibres.

7. Matériel suivant l'une des revendications 1 à 6, **caractérisé en ce qu'**en l'état n'ayant pas encore fait prise, il présente une densité de 0,7 à 1,3 g/cm³.

8. Matériel suivant l'une des revendications 1 à 7, **caractérisé en ce qu'**il se présente sous la forme de plaques préfabriquées, qui sont fabriquées par moulage ou par filtre-presse.

9. Matériel suivant la revendication 8, **caractérisé en ce que** les plaques se présentent sous une forme cintrée.

10. Plaque préfabriquée constituée d'un matériel de protection contre l'incendie suivant au moins l'une des revendications 1 à 9.
